# EUROPÄISCHE PATENTSCHRIFT

(11) **EP 1 230 882 B1**
(45) Veröffentlichungstag und Bekanntmachung des Hinweises auf die Patenterteilung: **20.06.2007**
(21) Anmeldenummer: 02002328.9
(22) Anmeldetag: 31.01.2002
(51) Int. Cl.: A47J 41/00

(54) **Kanne**
Jug
Pot

(30) Priorität: 08.02.2001 DE 10105766
(43) Veröffentlichungstag der Anmeldung: 14.08.2002
(73) Patentinhaber: LEIFHEIT Aktiengesellschaft, D-56377 Nassau (DE)
(72) Erfinder: Schülein, Rolf Günter, 56379 Singhofen (DE); Wörsdörfer, Berno, 56414 Obererbach (DE)

(56) Entgegenhaltungen:
- DE-A- 3 412 210

## Beschreibung

Die Erfindung betrifft eine Kanne entsprechend dem Oberbegriff des Anspruches 1.

FR-PS 1 193 466 offenbart eine Kanne mit einem Deckel an dem ein Handgriff angeordnet ist. Der Behälterhals der bekannten Kanne trägt auf seiner Außenseite ein Gewinde, auf das ein mit entsprechendem Innengewinde versehener Deckel aufgeschraubt werden kann, der auch einen Haltegriff für die Kanne aufweist. Zum Verbinden des Deckels mit dem Behälter oder zu dessen Entfernen von diesem ist es also notwendig, den Deckel mit mehr oder weniger Schraubdrehungen auf den Behälter aufzuschrauben bzw. von diesem abzuschrauben. Ferner ist im Hinblick auf die Tatsache einer Schraubverbindung zwischen Deckel und Behälter nicht bereits von der Funktionsweise dieser Verbindung her stets gewährleistet, dass der Deckel in einer dem äußeren Anschein nach korrekten Verbindungsposition mit dem Behälter auch wirklich vollständig und wie vorgesehen dichtend auf den Behälterhals aufgeschraubt ist.

Die DE-U-84 11 992 zeigt eine Kanne, deren Deckel mit Außengewinde versehen ist und in eine mit entsprechendem Innengewinde versehene Öffnung eines ein Isoliergefäß aufnehmenden Schutzbehälters eingeschraubt werden kann. - Bei dieser Kanne ist der Haltegriff an den Schutzbehälter angeformt.

Die DE-A-34 12 210 zeigt eine Kanne, deren Deckel mittels zweier Verrastungsnasen mit dem Öffnungsbereich eines einen Isolierglaseinsatz aufnehmenden Schutzbehälters verbunden werden kann. Während die eine dieser Verrastungsnasen starr mit dem Deckel verbunden ist, ist die andere Verrastungsnase gegen Federkraft verschiebbar am Deckel gelagert und hintergreift in Verbindungsposition mit dem Schutzbehälter einen Bereich der Schnaupe des Schutzbehälters. - Im übrigen ist der Haltegriff auch dieser Kanne einstückig an den Schutzbehälter angeformt.

Der vorliegenden Erfindung liegt die Aufgabe zugrunde, eine Kanne anzugeben, die einfach zu handhaben ist und deren Deckel auf einfache und leichte Weise mit dem Behälter verbunden werden kann.

Die Aufgabe wird durch eine Kanne gelöst, die dadurch gekennzeichnet ist, dass der Haltegriff an dem Deckel angeordnet ist und dass die Vertiefung in Form einer umlaufenden Nut ausgebildet ist.

Die Erfindung ermöglicht eine einfach und leicht durchzuführende Verbindung des Deckels mit dem Behälter, indem der Deckel mit seinem unteren - dem Innenraum des Behälters zugekehrten - Ende in den Behälter eingesteckt wird, worauf im Zuge der Einsteckbewegung eine Verriegelungsposition erreicht wird, in der der Deckel mit dem Behälter verriegelt wird. Eine unsichere oder unkorrekte Zwischenstellung von Deckel und Behälter bzw. Behälterhals wie im Fall einer Schraubverbindung ist bei der erfindungsgemäßen Kanne nicht möglich.

Insbesondere hat die erfindungsgemäße Kanne den Gebrauchsvorteil, dass der Deckel in jeder Winkelposition zum Behälter - bezogen auf dessen Längsachse - in den Behälter eingesteckt und mit diesem verriegelt werden kann. Ein weiterer Vorteil besteht in der herstellungsmäßig kostengünstigen Umsetzbarkeit dieser Lösung.

Eine praktische und dem einfachen und sicheren Gebrauch der Kanne dienliche Lösung im Zusammenhang mit der Verriegelung des Deckels am Behälter ist im Anspruch 3 angegeben.

Anspruch 4 betrifft eine gleichermaßen konstruktiv einfache und funktionsmäßig sichere Lösung für die Ausgestaltung der Verriegelungselemente und deren antriebsmäßige Verbindung mit der Verriegelungshandhabe bzw. dem Verriegelungshebel.

Um die Verriegelungsposition zwischen Deckel und Behälter in jedem Fall sicher aufrechtzuerhalten bzw. zu erreichen, schlägt Anspruch 5 den Einsatz einer entsprechend angeordneten Feder vor.

Ein weiteres, der einfachen Handhabung der Kanne dienendes konstruktives Detail beschreibt Anspruch 6.

Besonders vorteilhaft im Hinblick auf Sicherheit im Gebrauch ist die Ausgestaltung der Kanne gemäß Anspruch 7.

Die Ansprüche 8 und 9 geben zweckmäßige weitere Ausgestaltungen von Haltegriff und Verriegelungshebel der Kanne an.

Ergänzend zu der neuen, mit der Erfindung erreichten Funktionalität der Kanne nennt Anspruch 10 eine daran besonders gut angepasste Lösung für einen flüssigkeitsdichten Abschluss zwischen Deckel und Behälter sowie für die Möglichkeit einer - in Richtung der Längsachse des Behälters - spielfreien Befestigung des Deckels auf/in dem Behälter.

Die Ansprüche 11 und 12 geben mögliche weitere Ausgestaltungen der Kanne im Hinblick auf das Material an, aus dem der Behälter hergestellt werden kann, wobei die Lösung nach Anspruch 11 besondere Gebrauchsvorteile hat, die von aus Edelstahl hergestellten Isolier- oder Thermoskannen her an sich bekannt sind.

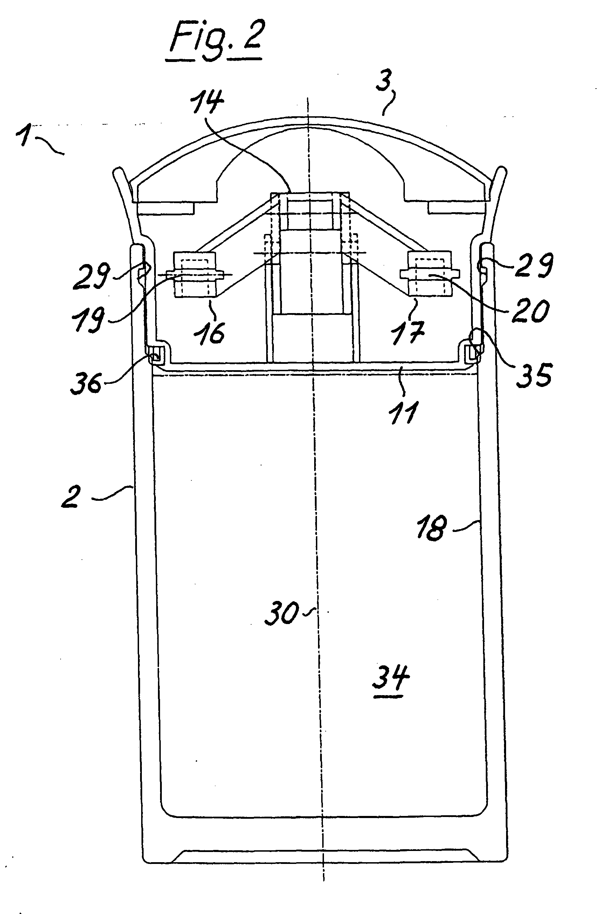

Anhand der Fig. 1 bis 5 der Zeichnung wird die Erfindung im folgenden an einem Ausführungsbeispiel näher erläutert.

Es zeigen
- Fig. 1: eine erfindungsgemäße Kanne in teilweise schematischer Darstellung in der Seitenansicht und in Verriegelungsposition von Deckel und Behälter,
- Fig. 2: die Kanne nach Fig. 1 in ebenfalls teilweise schematischer Darstellung in der Vorderansicht,
- Fig. 3: die Kanne nach den Fig. 1 und 2 in ebenfalls teilweise schematischer Darstellung in der Seitenansicht und in Entriegelungsposition von Deckel und Behälter,
- Fig. 4: die Kanne nach den Fig. 1 bis 3 in ebenfalls teilweise schematischer Darstellung in der Aufsicht und in Verriegelungsposition von Deckel und Behälter, und
- Fig. 5: die Kanne nach den Fig. 1 bis 4 in ebenfalls teilweise schematischer Darstellung in der Seitenansicht und in Verriegelungsposition von Deckel und Behälter sowie mit geöffneter Verschlusskappe.

Die Zeichnung zeigt eine Kanne 1, die aus einem Behälter 2 und einem Deckel 3 besteht. Der Deckel 3 weist - einstückig mit diesem verbunden - einen Haltegriff 4 auf. Auf der dem Haltegriff 4 gegenüberliegenden Seite des Deckels 3 ist an diesen eine Schnaupe 5 angeformt, an die sich in Richtung auf das in der Zeichnung untere Ende des Deckels 3 ein Kanal 6 anschließt. Der Kanal 6 führt zum Innenraum des Behälters 2 und ist mittels einer Verschlusskappe 7 verschließbar, die sich über eine an der Verschlusskappe 7 befindliche Dichtung 8 in Verschließstellung dichtend gegen einen Wandungsrand 9 des Kanals 6 legt. Zum selbsttätigen Aufrechterhalten dieser Verschließstellung dient eine Feder 10, die sich einerseits an einem Bereich des Deckelgrundkörpers 11 abstützt und die andererseits an einem mit der Verschlusskappe 7 einteiligen und um eine Achse 12 schwenkbar am Deckelgrundkörper 11 gelagerten Betätigungshebel 13 angreift. - Durch entsprechendes Betätigen des Betätigungshebels 13 kann die Verschlusskappe 7 um den Winkel α in Richtung vom Wandungsrand 9 weg geschwenkt werden.

Im Deckelgrundkörper 11 ist ein Stellorgan 14 in Richtung des Doppelpfeiles 15 verschiebbar gelagert, das an seinem dem Kanal 6 zugekehrten Ende in Fortsätze 16, 17 verzweigt, deren freie Enden - auf der einen bzw. auf der anderen Seite des Kanals 6 - auf die mit 18 bezeichnete Innenwandung des Behälters zu gerichtet sind und jeweils einen Schubriegel 19 bzw. 20 aufweisen.

An seinem dem Kanal 6 abgekehrten Ende weist das Stellorgan 14 eine nutartige Kulisse 21 auf, in die ein Stellzapfen 22 - mit oder ohne zusätzlichem Kulissenstein - eingreift. Der Stellzapfen befindet sich an einem Verriegelungshebel 23, welcher am deckelseitigen Ende des Haltegriffes 4 am Deckelgrundkörper 11 um eine Achse 24 schwenkbar gelagert ist.

Am Deckelgrundkörper 11 ist ferner ein Schwenkhebel 25 um eine Achse 26 schwenkbar gelagert. Der Schwenkhebel 25 steht über einen Steuerzapfen oder dgl. 27 in Antriebsverbindung mit dem Stellorgan 14; diese Antriebsverbindung kann konstruktiv ähnlich der zuvor beschriebenen Antriebsverbindung zwischen Verriegelungshebel 23 und Stellorgan 14 ausgeführt sein. - Auf der dem Steuerzapfen 27 gegenüberliegenden Seite der Achse 26 weist der Schwenkhebel 25 - in Form eines Fortsatzes an dem betreffenden Ende des Schwenkhebels - einen Schwenkriegel 28 auf.

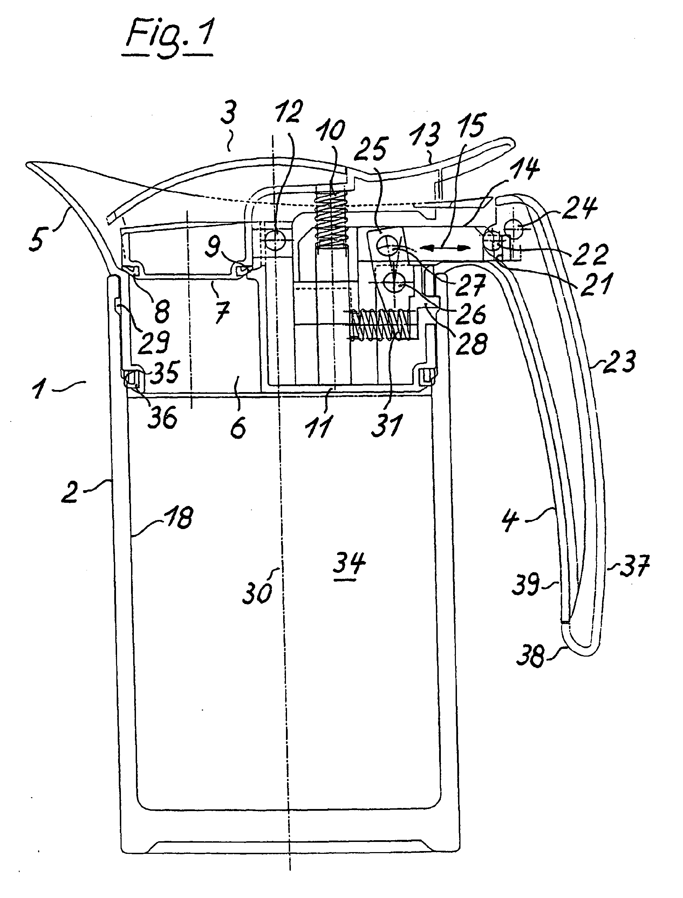

In der in den Fig. 1, 4 und 5 gezeigten Situation - nämlich der Verriegelungsposition von Deckel 3 und Behälter 2 - greifen die Schubriegel 19, 20 sowie der Schwenkriegel 28 in eine umlaufende Nut 29 ein, die im Eintauchbereich des Deckels 3 auf der Innenseite des Behälters 2 - in dessen Innenwandung 18 - vorgesehen ist. In dieser Verriegelungsposition ist der Deckel 3 also am Behälter 2 arretiert.

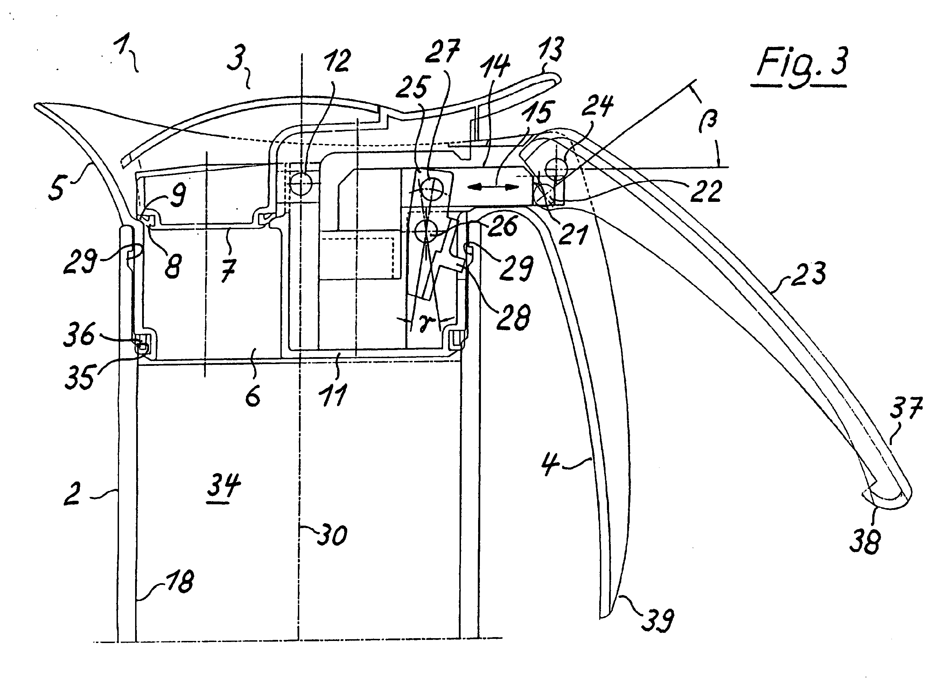

In der in Fig. 3 gezeigten Situation - nämlich der Entriegelungsposition von Deckel 3 und Behälter 2 - sind die Schubriegel 19, 20 und der Schwenkriegel 28 soweit in das Innere des Deckels 3 zurückgezogen, dass der Deckel 3 mit einer Relativbewegung zum Behälter 2 in Richtung der mit 30 bezeichneten Längsachse des Behälters 2 vom Behälter 2 auf einfache Weise abgenommen/abgezogen werden kann.

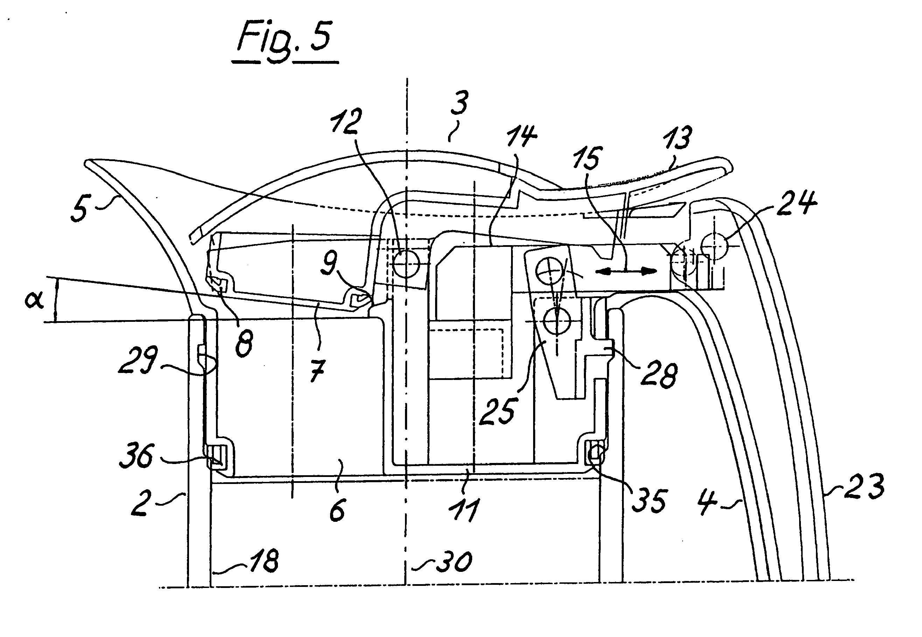

Zum Entriegeln des Deckels 3 vom Behälter 2 wird der Verriegelungshebel 23 gegenüber seiner Lage in Verriegelungsposition (siehe Fig. 5) um einen Winkel β in die in Fig. 3 dargestellte Position geschwenkt, wobei der erwähnte Schwenkriegel 28 um einen Winkel γ verschwenkt wird (siehe Fig. 3). Bei dieser Schwenkbewegung wird eine Feder 31 gespannt, die einerseits an einem Bereich des Deckelgrundkörpers 11 anliegt und andererseits an dem dem Steuerzapfen oder dgl. 27 abgekehrten Ende des Schwenkhebels 25 angreift. - Diese Feder 31 bewirkt also, dass auf Verriegelungshebel 23, Stellorgan 14 mit Fortsätzen 16, 17 sowie Schubriegel 19, 20 und Schwenkriegel 28 stets eine in Richtung auf die Verriegelungsposition wirkende Kraft an dieser Verriegelungseinheit ansteht.

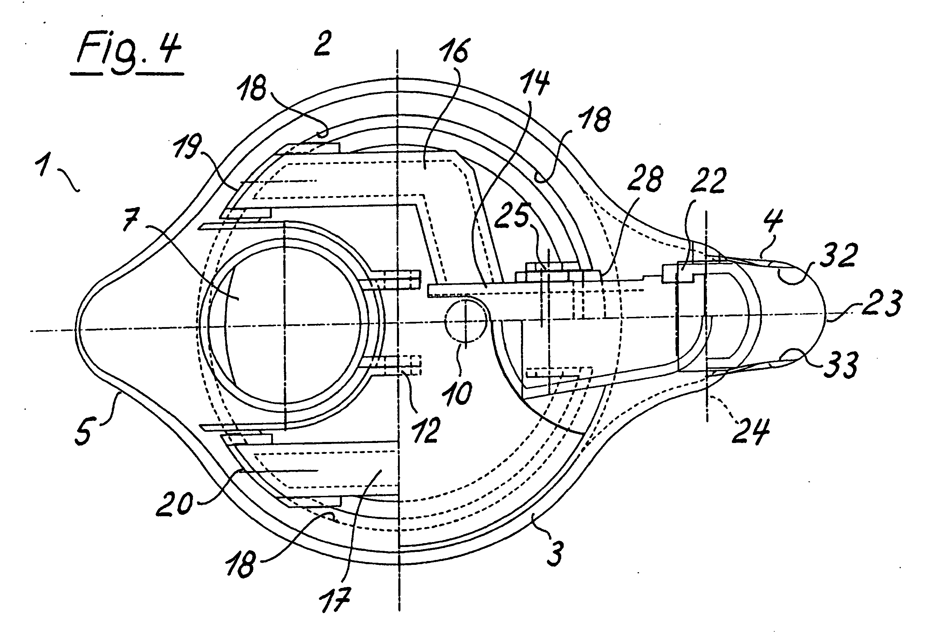

Zur weiteren Sicherung/Festlegung der in Verriegelungsposition eingenommenen gegenseitigen Lage von Haltegriff 4 und Verriegelungshebel 23 dienen am Haltegriff 4 auf dessen nicht näher bezeichneter Innenwandung vorgesehene erhabene Verrastungsnoppen 32, 33 (siehe Fig. 4), die u.a. auch einen gewissen Klemmeffekt zwischen dem Haltegriff 4 und den betreffenden Bereichen des Verriegelungshebels 23 bewirken.

Um den Deckel 3 besonders einfach und leicht und gegebenenfalls mit nur einer Hand in den Behälter 2 einführen und mit diesem - unter Wirkung der oben beschriebenen Feder 31 - selbsttätig verriegeln zu können, können die Schubriegel 19, 20 und der Schwenkriegel 28 auf der dem mit 34 bezeichneten Innenraum des Behälters 2 zugekehrten Seite jeweils mit einer nicht näher dargestellten Anlaufschräge versehen sein, so dass beim Einführen des Deckels 3 in den Behälter 2 die Schub- bzw. Schwenkriegel 19, 20 bzw. 28 von der Innenwandung 18 des Behälters 2 entgegen der Wirkung der Feder 31 entsprechend weit in das Innere des Deckels 3 zurückgedrängt werden, bis der Deckel 3 die Verriegelungsposition erreicht, in der die Schub- bzw. Schwenkriegel 19, 20 bzw. 28 dann unter der Wirkung der Feder 31 selbsttätig in die Nut 29 einrücken.

Zum Erzielen eines flüssigkeitsdichten Abschlusses zwischen Deckel 3 und Behälter 2, aber auch um den Deckel 3 - in Richtung der Längsachse 30 gesehen - spielfrei auf dem Behälter befestigen zu können, weist der Behälter 2 an seiner Innenwandung 18 einen umlaufenden Absatz 35 auf, an den sich in Verriegelungsposition von Deckel 3 und Behälter 2 unter einem gewissen Druck eine ebenfalls umlaufende Dichtung 36 anlegt, die am Deckel 3 in einer nicht näher bezeichneten Nut des Deckels angeordnet ist.

Ein Vorteil der Kanne nach dem Ausführungsbeispiel ist auch darin zu sehen, dass der Verriegelungshebel 23 in der Verriegelungsposition von Deckel 3 und Behälter 2 eine Griffeinheit mit dem Haltegriff 4 bildet; dieser konstruktive Sachverhalt vermindert sehr die Möglichkeit eines versehentlichen Entriegelns des Deckels vom Behälter der Kanne. - Um dennoch aber den Verriegelungshebel 23 im Fall einer gewollten Entriegelung des Deckels 3 leicht und sicher greifen zu können, weist der Verriegelungshebel 23 an seinem mit 37 bezeichneten freien Ende einen Fortsatz 38 auf, der um ein gewisses Maß über das mit 39 bezeichnete freie Ende des Haltegriffes 4 hinausreicht (siehe Fig. 1).

Der Behälter 2 nach dem Ausführungsbeispiel kann aus Metall bestehen und im Hinblick auf Wärmeisolation in an sich bekannter Weise doppelwandig ausgeführt sein. Es ist aber auch möglich, den Behälter 2 aus Kunststoff herzustellen.

Anstelle der im Zusammenhang mit diesem Ausführungsbeispiel gezeigten und beschriebenen Lösung für die Gestaltung der Verriegelungselemente ist es auch möglich, alle Verriegelungselemente als Schwenkriegel oder aber als Schubriegel auszubilden, wozu dann eine entsprechende Anpassung des Antriebszuges der Verriegelungselemente erforderlich ist, die für einen Fachmann bei Kenntnis der Erfindung ohne weitere erfinderische Bemühungen möglich wäre.

### BEZUGSZEICHENLISTE

- 1: Kanne
- 2: Behälter
- 3: Deckel
- 4: Haltegriff
- 5: Schnaupe
- 6: Kanal
- 7: Verschlusskappe (für die Öffnung der Kanne 1)
- 8: Dichtung (an der Verschlusskappe 7)
- 9: Wandungsrand (am Kanal 6)
- 10: Feder (für die Verschlusskappe 7)
- 11: Deckelgrundkörper
- 12: Achse (des Betätigungshebels 13)
- 13: Betätigungshebel (für die Verschlusskappe 7)
- 14: Stellorgan (für die Schubriegel 19, 20 bzw. den Schwenkriegel 28)
- 15: Doppel-Pfeil
- 16: Fortsatz (am Stellorgan 14)
- 17: Fortsatz (am Stellorgan 14)
- 18: Innenwandung (des Behälters 2)
- 19: Schubriegel (am Fortsatz 16)
- 20: Schubriegel (am Fortsatz 17)
- 21: Kulisse (Führung für den Stellzapfen 22 des Verriegelungshebels 23)
- 22: Stellzapfen (am Verriegelungshebel 23)
- 23: Verriegelungshebel (zum Verriegeln von Deckel 3 und Behälter 2)
- 24: Achse (für den Verriegelungshebel 23)
- 25: Schwenkhebel (für den Schwenkriegel 28)
- 26: Achse (des Schwenkhebels 25)
- 27: Steuerzapfen (am Schwenkhebel 25)
- 28: Schwenkriegel (am Schwenkhebel 25)
- 29: Nut (Vertiefung zur Aufnahme der Schubriegel 19, 20 und des Schwenkriegels 28)
- 30: Längsachse (des Behälters 2)
- 31: Feder (zwischen Deckelgrundkörper 11 und Schwenkhebel 25)
- 32: Verrastungsnoppe (am Haltegriff 4)
- 33: Verrastungsnoppe (am Haltegriff 4)
- 34: Innenraum (des Behälters 2)
- 35: Absatz (an der Innenwandung 18 des Behälters 2)
- 36: Dichtung (am Deckel 3)
- 37: freies Ende (des Verriegelungshebels 23)
- 38: Fortsatz (am Verriegelungshebel 23)
- 39: freies Ende (des Haltegriffes 4)

- α: Öffnungswinkel der Verschlusskappe 7
- β: Schwenkwinkel des Verriegelungshebels 23 beim Entriegeln des Deckels 3 vom Behälter 2
- γ: Schwenkwinkel des Schwenkhebels 25 in Entriegelungsposition des Schwenkriegels 28

## Patentansprüche

1. Kanne (1) mit einem Behälter (2) und einem diesen verschließenden, abnehmbaren Deckel (3), und mit einer Einrichtung zum Befestigen des Deckels (3) auf dem Behälter (2), wobei auf der Innenseite des Behälters (2) im Eintauchbereich des Deckels (3) zumindest eine Vertiefung (Nut 29) vorgesehen ist und wobei im Deckel (3) zumindest ein Verriegelungselement (Schubriegel 19, 20, Schwenkriegel 28) angeordnet ist, das mit der Vertiefung (Nut 29) über eine Verriegelungshandhabe (Verriegelungshebel 23) in Eingriff bringbar ist, **dadurch gekennzeichnet, dass** der Haltegriff (4) an dem Deckel (3) angeordnet ist und dass die Vertiefung in Form einer umlaufenden Nut (29) ausgebildet ist.

2. Kanne nach Anspruch 1, **dadurch gekennzeichnet, dass** die Verriegelungshandhabe als Verriegelungshebel (23) ausgebildet ist, der im Bereich des deckelseitigen Endes des Haltegriffes (4) am Deckel (3) schwenkbar gelagert ist und an einem im Deckel (3) gelagerten Stellorgan ((14) angreift, das in Antriebsverbindung mit dem oder den Verriegelungselementen (Schubriegel 19, 20, Schwenkriegel 28) steht.

3. Kanne nach einem der Ansprüche 1 oder 2, **dadurch gekennzeichnet, dass** das Stellorgan (14) auf der der Verriegelungshandhabe bzw. dem Verriegelungshebel (23) abgekehrten Seite an Fortsätzen (16, 17) jeweils einen mit einer Vertiefung bzw. mit der Nut (29) korrespondierenden Schubriegel (19 bzw. 20) als Verriegelungselement trägt, während das Stellorgan (14) auf der dem Verriegelungshebel (23) zugekehrten Seite mit einem im Deckel (3) gelagerten Schwenkhebel (25) antriebsverbunden ist, der einen mit einer Vertiefung bzw. mit der Nut (29) korrespondierenden Schwenkriegel ((28) als Verriegelungselement trägt.

4. Kanne nach Anspruch 1, **gekennzeichnet durch** eine Feder (31), die sich einerseits an einem ortsfesten Bereich des Deckels (3) abstützt und die andererseits an einer Stelle des Antriebszuges der Verriegelungshandhabe bzw. des Verriegelungshebels (23) zu dem oder den Verriegelungselementen (Schubriegel 19, 20, Schwenkriegel 28) angreift derart, dass das bzw. die Verriegelungselemente (Schubriegel 19, 20, Schwenkriegel 28) in die Verriegelungsposition mit dem Behälter (2) bewegt bzw. in dieser gehalten werden.

5. Kanne nach Anspruch 1, **dadurch gekennzeichnet, dass** das oder die Verriegelungselemente (Schubriegel 19, 20, Schwenkriegel 28) auf der dem Innenraum (34) des Behälters (2) zugekehrten Seite mit einer Anlaufschräge versehen sind.

6. Kanne nach Anspruch 2, **dadurch gekennzeichnet, dass** in Verriegelungsposition des Deckels (3) am Behälter (2) der Verriegelungshebel (23) mit dem Haltegriff (4) eine Griffeinheit bildet.

7. Kanne nach Anspruch 6, **dadurch gekennzeichnet, dass** der Verriegelungshebel (23) an seinem freien Ende (37) einen Fortsatz (38) aufweist, der um ein gewisses Maß über das freie Ende (39) des Haltegriffes (4) hinausreicht.

8. Kanne nach Anspruch 6, **dadurch gekennzeichnet, dass** der Verriegelungshebel (23) und der Haltegriff (4) mit einer in Verriegelungsposition des Deckels (3) mit dem Behälter (2) wirksamen gegenseitigen Verrastung (Verrastungsnoppen 32, 33) versehen sind.

9. Kanne nach Anspruch 1, **dadurch gekennzeichnet, dass** auf der Innenseite des Behälters (2) ein umlaufender Absatz (35) vorgesehen ist, dem eine umlaufende elastische Dichtung (36) am Deckel (3) zugeordnet ist.

10. Kanne nach Anspruch 1, **dadurch gekennzeichnet, dass** der Behälter (2) aus Metall besteht und doppelwandig ausgeführt ist.

11. Kanne nach Anspruch 1, **dadurch gekennzeichnet, dass** der Behälter (2) aus Kunststoff besteht.

## Claims

1. Jug (1) comprising a container (2) and a removable lid (3) which seals the said container, and comprising a device for fastening the lid (3) on the container (2), wherein on the inner side of the container (2), in the region of intrusion of the lid (3), at least one recess (groove 29) is provided, and wherein in the lid (3) there is disposed at least one locking element (sliding bolt 19, 20, swing bolt 28), which jug be brought into engagement with the recess (groove 29) via a locking handle (locking lever 23), **characterized in that** the grab handle (4) is disposed on the lid (3) and **in that** the recess is configured in the form of a circumferential groove (29).

2. Jug according to Claim 1, **characterized in that** the locking handle is configured as a locking lever (23), which in the region of the lid-side end of the grab handle (4) is pivotably mounted on the lid (3) and acts upon an actuating member (14) which is mounted in the lid (3) and is drive-connected to the locking element(s) (sliding bolt 19, 20, swing bolt 28).

3. Jug according to Claim 1 or 2, **characterized in that** the actuating member (14), on the side facing away from the locking handle or locking lever (23), bears as a locking element, on continuations (16, 17), a respective sliding bolt (19 or 20) which corresponds with a recess or with the groove (29), whilst the actuating member (14), on the side facing the locking lever (23), is drive-connected to a rocking lever (25) which is mounted in the lid (3) and bears as a locking element a swing bolt (28) which corresponds with a recess or with the groove (29).

4. Jug according to Claim 1, **characterized by** a spring (31), which, on the one hand, is supported against a fixed region of the lid (3) and, on the other hand, acts upon a place on the drive pull mechanism of the locking handle or locking lever (23) to the locking element(s) (sliding bolt 19, 20, swing bolt 28) such that the locking element(s) (sliding bolt 19, 20, swing bolt 28) is/are moved into or held in the locking position with the container (2).

5. Jug according to Claim 1, **characterized in that** the locking element(s) (sliding bolt 19, 20, swing bolt 28), on the side facing the interior (34) of the container (2), is/are provided with a stop slope.

6. Jug according to Claim 2, **characterized in that**, in the locking position of the lid (3) on the container (2), the locking lever (23) forms with the grab handle (4) a handle mechanism.

7. Jug according to Claim 6, **characterized in that** the locking lever (23) has at its free end (37) a continuation (38), which reaches out by a certain measure beyond the free end (39) of the grab handle (4).

8. Jug according to Claim 6, **characterized in that** the locking lever (23) and the grab handle (4) are provided with a reciprocal latching mechanism (latching knobs 32, 33) which is operative in the locking position of the lid (3) with the container (2).

9. Jug according to Claim 1, **characterized in that** on the inner side of the container (2) there is provided a circumferential step (35), to which there is assigned a circumferential elastic seal (36) on the lid (3).

10. Jug according to Claim 1, **characterized in that** the container (2) consists of metal and is of double-walled construction.

11. Jug according to Claim 1, **characterized in that** the container (2) consists of plastic.

## Revendications

1. Pot (1) avec un récipient (2) et un couvercle amovible (3) fermant celui-ci, et avec un dispositif pour fixer le couvercle (3) sur le récipient (2), dans lequel il est prévu au moins un creux (rainure 29) sur la face intérieure du récipient (2) dans la zone d'insertion du couvercle (3) et dans lequel au moins un élément de verrouillage (verrou coulissant 19, 20, verrou pivotant 28) est disposé dans le couvercle (3), lequel peut venir en prise avec le creux (rainure 29) au moyen d'une poignée de verrouillage (levier de verrouillage 23), **caractérisé en ce que** la poignée de prise (4) est montée sur le couvercle (3) et **en ce que** le creux est formé par une rainure périphérique (29).

2. Pot selon la revendication 1, **caractérisé en ce que** la poignée de verrouillage est réalisée en forme de levier de verrouillage (23), qui peut pivoter sur le couvercle (3) dans la région de l'extrémité de la poignée de prise (4) côté couvercle et attaque un organe de réglage (14) articulé dans le couvercle (3), qui est en liaison d'entraînement avec le ou les élément(s) de verrouillage (verrou coulissant 19, 20, verrou pivotant 28).

3. Pot selon l'une quelconque des revendications 1 ou 2, **caractérisé en ce que** l'organe de réglage (14) porte, sur des prolongements (16, 17), sur le côté situé à l'opposé de la poignée de verrouillage ou du levier de verrouillage (23), chaque fois un verrou coulissant (19 ou 20) correspondant à un creux ou à la rainure (29) comme élément de verrouillage, tandis que l'organe de réglage (14) est en liaison d'entraînement, sur le côté tourné vers le levier de verrouillage (23), avec un levier pivotant (25) articulé dans le couvercle (3), qui porte un verrou pivotant (28) correspondant à un creux ou à la rainure (29) comme élément de verrouillage.

4. Pot selon la revendication 1, **caractérisé par** un ressort (31), qui d'une part s'appuie sur une région fixe du couvercle (3) et qui d'autre part attaque le ou les élément(s) de verrouillage (verrou coulissant 19, 20, verrou pivotant 28) en un point de la ligne d'entraînement de la poignée de verrouillage ou du levier de verrouillage (23), de telle manière que le ou les élément(s) de verrouillage (verrou coulissant 19, 20, verrou pivotant 28) soit/soient déplacé(s) dans la position de verrouillage avec le récipient (2) ou soit/soient maintenu(s) dans cette position.

5. Pot selon la revendication 1, **caractérisé en ce que** le ou les élément(s) de verrouillage (verrou coulissant 19, 20, verrou pivotant 28) est/sont pourvu(s) d'une rampe d'entrée sur le côté tourné vers l'espace intérieur (34) du récipient (2).

6. Pot selon la revendication 2, **caractérisé en ce que**, en position de verrouillage du couvercle (3) sur le récipient (2), le levier de verrouillage (23) forme avec la poignée de prise (4) une unité de prise.

7. Pot selon la revendication 6, **caractérisé en ce que** le levier de verrouillage (23) présente à son extrémité libre (37) un prolongement (38), qui s'étend dans une certaine mesure au-delà de l'extrémité libre (39) de la poignée de prise (4).

8. Pot selon la revendication 6, **caractérisé en ce que** le levier de verrouillage (23) et la poignée de prise (4) sont pourvus d'un emboîtement mutuel (boutons d'encliquetage 32, 33) actif dans la position de verrouillage du couvercle (3) avec le récipient (2).

9. Pot selon la revendication 1, **caractérisé en ce qu'**il est prévu, sur la face intérieure du récipient (2), un épaulement périphérique (35), auquel est associé un joint d'étanchéité élastique périphérique (36) sur le couvercle (3).

10. Pot selon la revendication 1, **caractérisé en ce que** le récipient (2) est constitué de métal et est à double paroi.

11. Pot selon la revendication 1, **caractérisé en ce que** le récipient (2) est constitué de matière plastique.
